(19) **Europäisches Patentamt European Patent Office Office européen des brevets**

(11) **EP 3 813 166 B1**

(12) **EUROPEAN PATENT SPECIFICATION**

(45) Date of publication and mention of the grant of the patent:
**15.02.2023 Bulletin 2023/07**

(21) Application number: **19932232.2**

(22) Date of filing: **20.11.2019**

(51) International Patent Classification (IPC):
**H01M 4/66** (1974.07) **H01M 4/02** (1974.07)

(52) Cooperative Patent Classification (CPC):
**H01M 4/661; H01M 4/662; H01M 4/664; H01M 4/667; H01M 4/668;** H01M 4/663; H01M 2004/028; H01M 2220/20; Y02E 60/10

(86) International application number:
**PCT/CN2019/119744**

(87) International publication number:
**WO 2021/000504 (07.01.2021 Gazette 2021/01)**

(54) **POSITIVE ELECTRODE CURRENT COLLECTOR, POSITIVE ELECTRODE PIECE, ELECTROCHEMICAL DEVICE, BATTERY MODULE, BATTERY PACK, AND APPARATUS**

POSITIVER ELEKTRODENSTROMKOLLEKTOR, POSITIVES ELEKTRODENSTÜCK, ELEKTROCHEMISCHE VORRICHTUNG, BATTERIEMODUL, BATTERIEPACK UND VORRICHTUNG

COLLECTEUR DE COURANT D'ÉLECTRODE POSITIVE, PIÈCE D'ÉLECTRODE POSITIVE, DISPOSITIF ÉLECTROCHIMIQUE, MODULE DE BATTERIE, BLOC BATTERIE, ET APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2019 CN 201910586431**

(43) Date of publication of application:
**28.04.2021 Bulletin 2021/17**

(60) Divisional application:
**22215980.8**

(73) Proprietor: **Contemporary Amperex Technology Co., Limited**
**Jiaocheng District**
**Ningde**
**Fujian 352100 (CN)**

(72) Inventors:
• **LIANG, Chengdu**
  **Ningde, Fujian 352100 (CN)**
• **HUANG, Qisen**
  **Ningde, Fujian 352100 (CN)**
• **WANG, Shiwen**
  **Ningde, Fujian 352100 (CN)**

(74) Representative: **Gong, Jinping**
**CocreateIP**
**Eggenfeldenerstraße 56**
**81929 München (DE)**

(56) References cited:
EP-A1- 3 496 186    EP-A1- 3 496 190
CN-A- 102 031 490    CN-A- 106 654 285
CN-A- 107 154 499    CN-A- 109 269 709
CN-A- 109 873 163    CN-A- 109 873 164
CN-A- 109 873 166    US-A1- 2016 133 348

**Description**

**TECHNICAL FIELD**

This application relates to the field of electrochemical apparatus technologies, and in particular, to a positive current collector, a positive electrode plate, an electrochemical apparatus, a battery module, a battery pack, and a device.

**BACKGROUND**

Secondary batteries are increasingly used in electric vehicles and consumer electronics because of their advantages of high energy density, stable output voltage, long cycle life, and low environmental pollution. With wide application of the secondary batteries, people have imposed higher requirements on the energy density and electrochemical performance of batteries. During research, the inventor finds that a current collector with a composite structure of a support layer and a conductive layer helps reduce the weight of the current collector in comparison to a conventional metal current collector, thereby improving the weight energy density of the battery. However, how to provide higher electrochemical performance while improving the weight energy density of the battery has become a technical issue to be resolved.

On the basis of this, this application is proposed. EP 34961186 discloses inventions with several features in common with the subject-matter of the present invention.

**SUMMARY**

Embodiments of this application provide a positive current collector as specified in claims 1-8, a positive electrode plate as specified in claim 9, an electrochemical apparatus as specified in claim 10, a battery module as specified in claim 11, a battery pack as specified in claim 12, and a device as specified in claim 13, so that the positive current collector has both a smaller weight and higher electrical performance, and then the electrochemical apparatus has both a higher weight energy density and higher electrochemical performance.

A first aspect of the embodiments of this application provides a positive current collector that includes a support layer, having two opposite surfaces in a thickness direction of the support layer; and an aluminum-based conductive layer, disposed on at least one of the two surfaces of the support layer. A thickness $D_1$ of the aluminum-based conductive layer is $300nm \leq D_1 \leq 2\mu m$, preferably $500nm \leq D_1 \leq 1.5\mu m$; a density of the aluminum-based conductive layer is $2.5g/cm^3$ to $2.8g/cm^3$; and when a tensile strain of the positive current collector is 2.5%, a sheet resistance growth rate T of the aluminum-based conductive layer is $T \leq 10\%$, preferably $T \leq 5\%$, more preferably $T \leq 2\%$, or still more preferably $T \leq 1\%$. and wherein an elongation at break of the support layer is greater than or equal to an elongation at break of the aluinum-based conductive layer.

A second aspect of the embodiments of this application provides a positive electrode plate that includes a positive current collector and a positive electrode active material layer disposed on the positive current collector, and the positive current collector is the positive current collector according to the first aspect of the embodiments of this application.

A third aspect of the embodiments of this application provides an electrochemical apparatus that includes a positive electrode plate, a negative electrode plate, a separator, and an electrolyte, where the positive electrode plate is the positive electrode plate according to the second aspect of the embodiments of this application.

A fourth aspect of this application provides a battery module that includes the electrochemical apparatus according to the third aspect of this application.

A fifth aspect of this application provides a battery pack that includes the battery module according to the fourth aspect of this application.

A sixth aspect of this application provides a device that includes the electrochemical apparatus according to the third aspect of this application, and the electrochemical apparatus serves as a power supply of the device.

Preferably, the device includes a mobile device, an electric vehicle, an electric train, a satellite, a ship, and an energy storage system.

According to the positive current collector provided in the embodiments of this application, the aluminum-based conductive layer with the smaller thickness is disposed on at least one surface of the support layer, greatly reducing the weight of the positive current collector, and therefore significantly improving the weight energy density of the electrochemical apparatus. In addition, when the density of the aluminum-based conductive layer is $2.5g/cm^3$ to $2.8g/cm^3$ and the tensile strain of the positive current collector is 2.5%, the sheet resistance growth rate of the aluminum-based conductive layer is less than 10%. In a process of processing and using the positive electrode plate and the electrochemical apparatus, a sharp resistance increase caused by tensile deformation can be avoided for the aluminum-based conductive layer with the smaller thickness, ensuring good conductivity and current collection performance for the positive current collector and providing low impedance and smaller polarization for the electrochemical apparatus. Therefore, the electrochemical apparatus has higher electrochemical performance.

The battery module, the battery pack, and the device in this application include the electrochemical apparatus described above, and therefore have at least the same advantages as the electrochemical apparatus.

## BRIEF DESCRIPTION OF DRAWINGS

To describe the technical solutions in the embodiments of this application more clearly, the following briefly introduces the accompanying drawings required for describing the embodiments of this application. Persons of ordinary skill in the art may still derive other drawings from these accompanying drawings without creative efforts.

FIG. 1 illustrates a schematic structural diagram of a positive current collector according to an embodiment of this application;

FIG. 2 illustrates a schematic structural diagram of a positive current collector according to another embodiment of this application;

FIG. 3 illustrates a schematic structural diagram of a positive current collector according to another embodiment of this application;

FIG. 4 illustrates a schematic structural diagram of a positive current collector according to another embodiment of this application;

FIG. 5 illustrates a schematic structural diagram of a positive current collector according to another embodiment of this application;

FIG. 6 illustrates a schematic structural diagram of a positive current collector according to another embodiment of this application;

FIG. 7 illustrates a schematic structural diagram of a positive current collector according to another embodiment of this application;

FIG. 8 illustrates a schematic structural diagram of a positive current collector according to another embodiment of this application;

FIG. 9 illustrates a schematic structural diagram of a positive current collector according to another embodiment of this application;

FIG. 10 illustrates a schematic structural diagram of an electrochemical apparatus according to an embodiment of this application;

FIG. 11 illustrates a schematic structural diagram of a battery module according to an embodiment of this application;

FIG. 12 illustrates a schematic structural diagram of a battery pack according to an embodiment of this application;

FIG. 13 is an exploded view of FIG. 12; and

FIG. 14 is a schematic diagram of an implementation of an electrochemical apparatus serving as a power supply of a device.

Reference numerals are described as follows:

10. positive current collector;
101. support layer;
101a. first surface; 101b. second surface;
1011. first sublayer; 1012. second sublayer; 1013. third sublayer;
102. aluminum-based conductive layer;
103. protective layer;
1. battery pack;
2. upper case;
3. lower case;
4. battery module; and
5. electrochemical apparatus.

## DESCRIPTION OF EMBODIMENTS

In order to make the objectives, technical solutions and beneficial technical effects of this application clearer, the following further describes this application in detail with reference to the embodiments. It should be understood that the embodiments described in this specification are merely intended to interpret this application rather than to limit this application.

For simplicity, only some numerical ranges are expressly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not expressly recorded, each point or individual value between endpoints of a range is included in the range. Therefore, each point or individual value may act as its own lower limit or upper limit to be combined with any other point or individual value or combined with any other lower limit or upper limit to form a range not expressly recorded.

In the description of this specification, it should be noted that, unless otherwise stated, "above" and "below" means inclusion of the number itself, and "more" in "one or more" means at least two.

The foregoing invention content of this application is not intended to describe each of the disclosed embodiments or implementations of this application. The following description illustrates exemplary embodiments in more detail by using examples. Throughout this application, guidance is provided by using a series of embodiments and the embodiments may be used in various combinations. In each instance, enumeration is only representative and should not be interpreted as exhaustive.

## Positive current collector

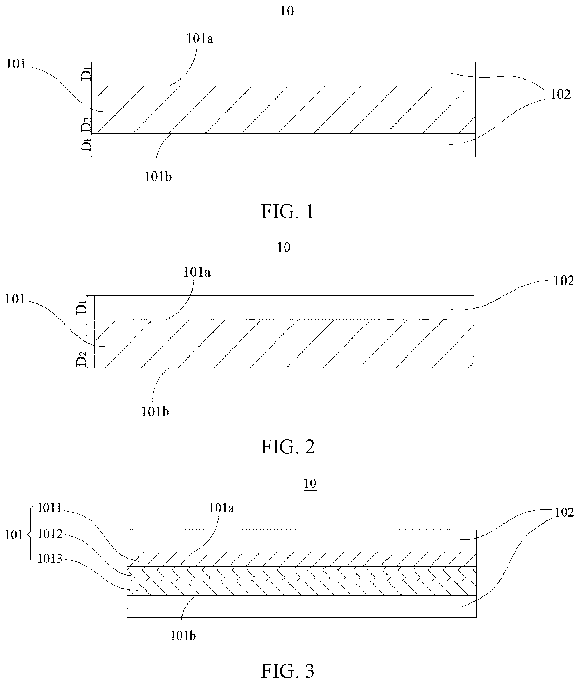

A first aspect of the embodiments of this application provides a positive current collector 10. Referring to FIG. 1 and FIG. 2, the positive current collector 10 includes a support layer 101 and an aluminum-based conductive layer 102 that are laminated. The support layer 101 has a first surface 101a and a second surface 101b that are opposite in a thickness direction of the support layer 101, and the aluminum-based conductive layer 102 is disposed on either or both of the first surface 101a and the second surface 101b of the support layer 101.

In the positive current collector 10, a thickness D1 of the aluminum-based conductive layer 102 is $300nm \leq D_1 \leq 2\mu m$, and a density of the aluminum-based conductive layer 102 is $2.5g/cm^3$ to $2.8g/cm^3$. When a tensile strain of the positive current collector 10 is 2.5%, a sheet resistance growth rate T of the aluminum-based conductive layer 102 is $T \leq 10\%$.

According to the positive current collector 10 provided in this embodiment of this application, the aluminum-based conductive layer 102 with a smaller thickness is disposed on at least one surface of the support layer 101, greatly reducing a weight of the positive current collector 10 in comparison to a conventional metal positive current collector (such as an aluminum foil), and therefore significantly improving a weight energy density of an electrochemical apparatus.

In addition, the positive current collector 10 is sometimes stretched during the processing and use of a positive electrode plate and the electrochemical apparatus, for example, during rolling or battery expansion. When the density of the aluminum-based conductive layer 102 is $2.5g/cm^3$ to $2.8g/cm^3$, and the tensile strain of the positive current collector 10 is 2.5%, the sheet resistance growth rate T of the aluminum-based conductive layer 102 is less than 10%. In this way, a sharp resistance increase caused by tensile deformation can be avoided for the aluminum-based conductive layer 102 with the smaller thickness, ensuring good conductivity and current collection performance for the positive current collector 10 and providing low impedance and smaller polarization for the electrochemical apparatus. Therefore, the electrochemical apparatus has higher electrochemical performance, that is, the electrochemical apparatus has both higher rate performance and higher cyclic performance. With the positive current collector 10 in this embodiment of this application, the electrochemical apparatus has both the higher weight energy density and higher electrochemical performance.

In some optional implementations, the thickness $D_1$ of the aluminum-based conductive layer 102 may be $2\mu m$, $1.8\mu m$, $1.5\mu m$, $1.2\mu m$, $1\mu m$, 900nm, 800nm, 700nm, 600nm, 500nm, 450nm, 400nm, 350nm, or 300nm. The thickness $D_1$ of the aluminum-based conductive layer 102 may be in a range formed by any two of the foregoing values. Preferably, $D_1$ is $500nm \leq D_1 \leq 1.5\mu m$.

The thickness of the aluminum-based conductive layer 102 is less than $2\mu m$, preferably less than $1.5\mu m$. The aluminum-based conductive layer 102 with the significantly reduced thickness helps improve the weight energy density of the electrochemical apparatus. The thickness of the aluminum-based conductive layer 102 is more than 300nm, preferably more than 500nm, so that the positive current collector 10 has good conductivity and current collection performance, and is also not prone to damages during processing and use of the positive current collector 10. Therefore, the positive current collector 10 has good mechanical stability and a longer service life.

In some optional implementations, the density of the aluminum-based conductive layer 102 may be $2.5g/cm^3$, $2.52g/cm^3$, $2.55g/cm^3$, $2.57g/cm^3$, $2.6g/cm^3$, $2.63g/cm^3$, $2.65g/cm^3$, $2.67g/cm^3$, $2.7g/cm^3$, $2.75g/cm^3$, $2.8g/cm^3$, or the like.

In some optional implementations, when the tensile strain of the positive current collector 10 is 2.5%, the sheet resistance growth rate T of the conductive layer 102 may be 10%, 9%, 8%, 7%, 6%, 5%, 4%, 3%, 2%, 1%, 0.5%, or 0; preferably $T \leq 5\%$, more preferably $T \leq 2\%$, or still more preferably $T \leq 1\%$.

According to the positive current collector 10 in this embodiment of this application, a thickness $D_2$ of the support layer 101 is preferably $1\mu m \leq D_2 \leq 20\mu m$, for example, may be $1\mu m$, $1.5\mu m$, $2\mu m$, $3\mu m$, $4\mu m$, $5\mu m$, $6\mu m$, $7\mu m$, $8\mu m$,

10μm, 12μm, 15μm, 18μm, or 20μm. The thickness $D_2$ of the support layer 101 may be in a range formed by any two of the foregoing values. Preferably $D_2$ is $2\mu m \leq D_2 \leq 10\mu m$, or more preferably $D_2$ is $2\mu m \leq D_2 \leq 6\mu m$.

The thickness $D_2$ of the support layer 101 is preferably more than 1μm, or more preferably more than 2μm, so that the support layer 101 has a sufficient mechanical strength and is not prone to breakage during the processing and use of the positive current collector 10, to well support and protect the conductive layer 102, thereby ensuring good mechanical stability and a longer service life for the positive current collector 10. The thickness $D_2$ of the support layer 101 is preferably less than 20μm, more preferably less than 10μm, or still more preferably less than 6μm, so that the electrochemical apparatus have a smaller volume and weight, improving the energy density of the electrochemical apparatus.

In some embodiments, preferably, a volume resistivity of the support layer 101 is greater than or equal to $1.0 \times 10^{-5}$ Ω m. Because of the relatively large volume resistivity of the support layer 101, a short-circuit resistance can be increased when an internal short circuit occurs in the electrochemical apparatus in case of exceptions such as nail penetration in the electrochemical apparatus, thereby improving nail penetration safety performance of the electrochemical apparatus.

An elongation at break of the support layer 101 is greater than or equal to an elongation at break of the aluminum-based conductive layer 102. Because the elongation at break of the support layer 101 is greater than or equal to the elongation at break of the aluminum-based conductive layer 102, burrs of the support layer 101 can cover burrs of the aluminum-based conductive layer 102 in case of exceptions such as nail penetration in the electrochemical apparatus. In addition, the relatively large volume resistivity of the support layer 101 greatly increases the short-circuit resistance. Therefore, the internal short circuit of the electrochemical apparatus can be effectively controlled, substantially reducing a short-circuit current and heat produced during a short circuit, and improving nail penetration safety performance of the electrochemical apparatus.

Further, the elongation at break of the support layer 101 is greater than the elongation at break of the aluminum-based conductive layer 102. The aluminum-based conductive layer 102 has relatively small extensibility while the support layer 101 has relatively large extensibility. In case of exceptions such as nail penetration in the electrochemical apparatus, the aluminum-based conductive layer 102 is forced to extend to cut off a local conductive network, avoiding a large-range internal short circuit of the electrochemical apparatus or even an internal short circuit of the entire electrochemical apparatus. In this way, the damage of the electrochemical apparatus caused by nail penetration can be limited to a penetrated point, forming only a "point break", without affecting normal operation of the electrochemical apparatus in a certain period of time.

Optionally, the elongation at break of the support layer 101 is greater than or equal to 12%. Further, the elongation at break of the support layer 101 is greater than or equal to 30%.

In some embodiments, a Young's modulus E of the support layer 101 is preferably $E \geq 1.9GPa$. The support layer 101 has appropriate rigidity to satisfy a support role of the support layer 101 for the aluminum-based conductive layer 102, ensuring an overall strength of the positive current collector 10. During processing of the positive current collector 10, the support layer 101 is not excessively extended or deformed to avoid breakage of the support layer 101, improving binding firmness between the support layer 101 and the aluminum-based conductive layer 102 to prevent peeling off. In this way, the positive current collector 10 has higher mechanical stability and higher operating stability, and the electrochemical apparatus has higher electrochemical performance, such as a longer cycle life.

The Young's modulus E of the support layer 101 is more preferably $4GPa \leq E \leq 20GPa$, so that the support layer 101 has enough rigidity and is also able to withstand deformation to some extent, being flexible to wind during processing and use of the positive current collector 10 to better prevent breakage.

In some optional implementations, the Young's modulus E of the support layer 101 may be 1.9GPa, 2.5GPa, 4GPa, 5GPa, 6GPa, 7GPa, 8GPa, 9GPa, 10GPa, 11GPa, 12GPa, 13GPa, 14GPa, 15GPa, 16GPa, 17GPa, 18GPa, 19GPa, or 20GPa. The Young's modulus E of the support layer 101 may be in a range formed by any two of the foregoing values.

In some embodiments, preferably, the support layer 101 uses one or more of a polymer material and a polymer-based composite material. Because the density of the polymer material and the polymer-based composite material is obviously smaller than the density of metal, the positive current collector 10 is obviously lighter than the conventional metal current collector, so that the weight energy density of the electrochemical apparatus is increased.

The polymer material is, for example, one or more of polyamide (PA), polyimide (PI), polyesters, polyolefins, polyynes, silicone polymers, polyethers, polyols, polysulfones, polysaccharide polymers, amino acid polymers, polysulfur nitride, aromatic polymers, aromatic heterocyclic polymers, epoxy resin, phenol-formaldehyde resin, a derivative thereof, a crosslinked product thereof, and a copolymer thereof.

Further, the polymer material is, for example, one or more of polycaprolactam (commonly referred to as nylon 6), polyhexamethylene adipamide (commonly referred to as nylon 66), polyterephthalamide (PPTA), polym-phenylene isophthalamide (PMIA), polyethylene terephthalate (PET), polybutylene terephthalate (PBT), polyethylene naphthalate (PEN), polycarbonate (PC), polyethylene (PE), polypropylene (PP), poly(p-phenylene ether) (PPE), polyvinyl alcohol (PVA), polystyrene (PS), polyvinyl chloride (PVC), polyvinylidene fluoride (PVDF), polytetrafluoroethylene (PTFE), polystyrene sulfonate (PSS), polyacetylene, polypyrrole (PPy), polyaniline (PAN), polythiophene (PT), polypyridine (PPY), silicone rubber (Silicone rubber), polyoxymethylene (POM), polyphenyl, polyphenylene oxide (PPO), polyphenylene sulfide (PPS), polyethylene glycol (PEG), acrylonitrile-butadiene-styrene copolymer (ABS), cellulose, starch, protein, a derivative thereof, a crosslinked product thereof, and a copolymer thereof.

The polymer-based composite material may include, for example, the polymer material and an additive. With the additive, the volume resistivity, elongation at break and Young's modulus of the polymer material can be adjusted. The additive may be one or more of a metal material and an inorganic non-metal material.

The additive of the metal material is, for example, one or more of aluminum, aluminum alloy, copper, copper alloy, nickel, nickel alloy, titanium, titanium alloy, iron, iron alloy, silver, and silver alloy.

The additive of the inorganic non-metallic material is, for example, one or more of a carbon-based material, aluminum oxide, silicon dioxide, silicon nitride, silicon carbide, boron nitride, silicate, and titanium oxide, and for another example, one or more of a glass material, a ceramic material, and a ceramic composite material. The carbon-based material is one or more of graphite, superconducting carbon, acetylene black, carbon black, Ketjen black, carbon dots, carbon nanotube, graphene, and carbon nanofiber.

In some embodiments, the additive may be one or more of metal-coated carbon-based materials, such as nickel-coated graphite powder and nickel-coated carbon fiber.

Preferably, the support layer 101 uses one or more of an insulating polymer material and an insulating polymer-based composite material. The support layer 101 has the relatively large volume resistivity, thereby improving the safety performance of the electrochemical apparatus.

Further, preferably, the support layer 101 uses one or more of polyethylene terephthalate (PET), polybutylene terephthalate (PBT), polyethylene naphthalate (PEN), polystyrene sulfonate (PSS), and polyimide (PI).

In the positive current collector 10 in this embodiment of this application, the support layer 101 may be a single-layer structure, or may be a composite-layer structure of two or more layers, such as two layers, three layers, or four layers.

As an example of the composite-layer structure of the support layer 101, referring to FIG. 3, the support layer 101 is a composite-layer structure formed by laminating a first sublayer 1011, a second sublayer 1012, and a third sublayer 1013. The support layer 101 of the composite-layer structure has a first surface 101a and a second surface 101b that are opposite, and the aluminum-based conductive layer 102 is laminated on the first surface 101a and the second surface 101b of the support layer 101. Certainly, the aluminum-based conductive layer 102 may be disposed only on the first surface 101a of the support layer 101, or may be disposed only on the second surface 101b of the support layer 101.

When the support layer 101 is a composite-layer structure of at least two layers, the material of each sublayer may be the same or different.

In some embodiments, a material of the conductive layer 102 is aluminum or an aluminum alloy. A weight percent composition of the aluminum element in the aluminum alloy is preferably more than 90%. The aluminum alloy may be, for example, an aluminum zirconium alloy.

In some embodiments, the volume resistivity of the aluminum-based conductive layer 102 is preferably $2.5 \times 10^{-8}$ $\Omega \cdot m$ to $7.8 \times 10^{-8}$ $\Omega \cdot m$, or more preferably $2.5 \times 10^{-8}$ $\Omega \cdot m$ to $3.8 \times 10^{-8}$ $\Omega \cdot m$, so that the positive current collector 10 has better conductivity and current collector performance, improving performance of the electrochemical apparatus.

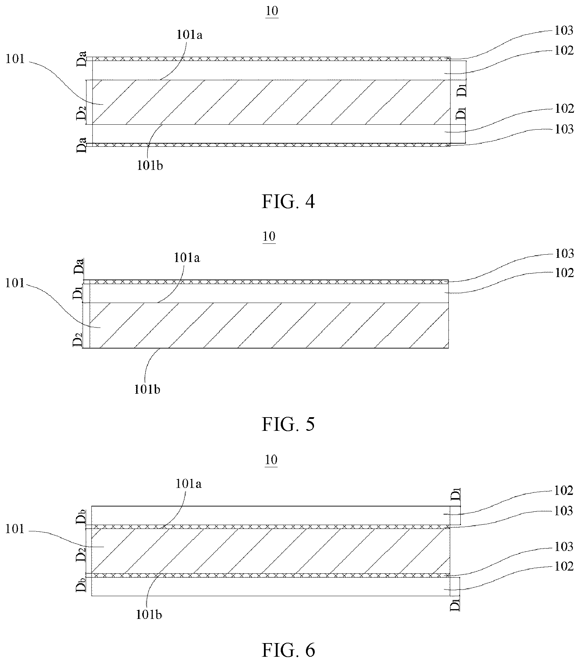

In some embodiments, referring to FIG. 4 to FIG. 9, the positive current collector 10 further optionally includes a protective layer 103. Specifically, the aluminum-based conductive layer 102 includes two opposite surfaces in a thickness direction of the aluminum-based conductive layer 102, and the protective layer 103 is laminated on either or both of the two surfaces of the aluminum-based conductive layer 102 to protect the aluminum-based conductive layer 102 from damages such as chemical corrosion or mechanical damages, thereby ensuring higher operating stability and a longer service life for the positive current collector 10. In addition, the protective layer 103 can further enhance the mechanical strength of the positive current collector 10.

A material of the protective layer 103 may be one or more of metal, metal oxide, and conductive carbon. The protective layer 103 made of the metal material is a metal protective layer. The protective layer 103 made of the metal oxide material is a metal oxide protective layer.

The metal is, for example, one or more of nickel, chromium, a nickel-based alloy, and a copper-based alloy. The nickel-based alloy is an alloy formed by adding one or more other elements to pure nickel, preferably a nickel-chromium alloy. The nickel-chromium alloy is an alloy formed by metal nickel and metal chromium. Optionally, a weight ratio of nickel to chromium in the nickel-chromium alloy is 1:99 to 99: 1, for example, 9:1. The copper-based alloy is an alloy formed by adding one or more other elements to pure copper, preferably a nickel-copper alloy. Optionally, a weight ratio of nickel to copper in the nickel-copper alloy is 1:99 to 99: 1, for example, 9: 1.

The metal oxide is, for example, one or more of aluminum oxide, cobalt oxide, chromium oxide, and nickel oxide.

The conductive carbon is, for example, one or more of graphite, superconducting carbon, acetylene black, carbon black, Ketjen black, carbon dots, carbon nanotube, grapheme, and carbon nanofiber, preferably one or more of carbon black, carbon nanotube, acetylene black, and graphene.

As some examples, referring to FIG. 4 and FIG. 5, the positive current collector 10 includes the support layer 101, the aluminum-based conductive layer 102, and the protective layer 103 that are laminated. The support layer 101 has the first surface 101a and the second surface 101b that are opposite in the thickness direction. The aluminum-based conductive layer 102 is laminated on at least one of the first surface 101a and the second surface 101b of the support layer 101, and the protective layer 103 is laminated on a surface of the aluminum-based conductive layer 102 facing away from the support layer 101.

The protective layer 103 (referred to as an upper protective layer) is disposed on the surface of the aluminum-based conductive layer 102 facing away from the support layer 101, to protect the aluminum-based conductive layer 102 from chemical corrosion and mechanical damages. This can also optimize an interface between the positive current collector 10 and a positive electrode active material layer, increases the bonding force between the positive current collector 10 and the positive electrode active material layer, and improves the performance of the electrochemical apparatus.

Further, the upper protective layer is preferably a protective layer of metal oxide, such as alumina oxide, cobalt oxide, nickel oxide, or chromium oxide. The metal oxide protective layer features high hardness and a high mechanical strength, is larger than a surface area, and has better corrosion resistance performance, so as to better protect the aluminum-based conductive layer 102, increase the bonding force between the positive current collector 10 and the positive electrode active material layer, and also improve an overall strength of the positive current collector 10. In addition, this helps improve the nail penetration safety performance of the electrochemical apparatus.

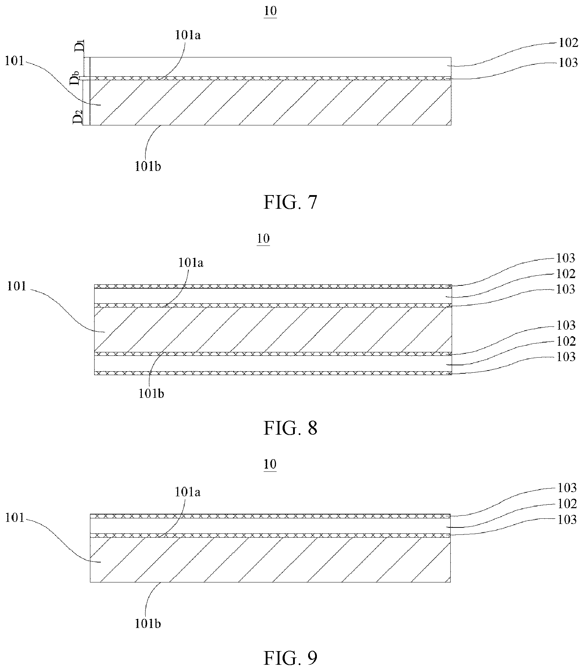

As some other examples, referring to FIG. 6 and FIG. 7, the positive current collector 10 includes the support layer 101, the aluminum-based conductive layer 102, and the protective layer 103 that are laminated. The support layer 101 has the first surface 101a and the second surface 101b that are opposite in the thickness direction. The aluminum-based conductive layer 102 is laminated on at least one of the first surface 101a and the second surface 101b of the support layer 101, and the protective layer 103 is laminated on a surface of the aluminum-based conductive layer 102 facing the support layer 101.

The protective layer 103 (referred to as a lower protective layer) is provided on the surface of the aluminum-based conductive layer 102 facing the support layer 101. The lower protective layer protects the aluminum-based conductive layer 102 from chemical corrosion and mechanical damages, and can also increase the bonding force between the aluminum-based conductive layer 102 and the support layer 101, preventing the aluminum-based conductive layer 102 from being separated from the support layer 101, and improving a supporting and protection role of the support layer 101 for the aluminum-based conductive layer 102.

Further, the lower protective layer is preferably a protective layer of metal oxide, such as aluminum oxide, cobalt oxide, nickel oxide, or chromium oxide, so as to better play the protection role, further increase the bonding force between the aluminum-based conductive layer 102 and the support layer 101, and also help improve the overall strength of the positive current collector 10.

As still some examples, referring to FIG. 8 and FIG. 9, the positive current collector 10 includes the support layer 101, the aluminum-based conductive layer 102, and the protective layer 103 that are laminated. The support layer 101 has the first surface 101a and the second surface 101b that are opposite in the thickness direction. The aluminum-based conductive layer 102 is laminated on at least one of the first surface 101a and the second surface 101b of the support layer 101, and the protective layer 103 is laminated on the surface of the aluminum-based conductive layer 102 facing away from the support layer 101 and the surface facing the support layer 101.

The protective layer 103 is provided on two surfaces of the aluminum-based conductive layer 102, that is, an upper protective layer and a lower protective layer are respectively disposed on the two surfaces of the conductive layer 102, so as to better protect the aluminum-based conductive layer 102. Further, both the upper protective layer and the lower protective layer are metal oxide protective layers.

It can be understood that the protective layer 103 on the two surfaces of the aluminum-based conductive layer 102 may be the same or different in material and thickness.

Preferably, a thickness $D_3$ of the protective layer 103 is $1nm \leq D_3 \leq 200nm$ and $D_3 \leq 0.1D_1$. The protective layer 103 with the thickness $D_3$ in the foregoing range can effectively protect the aluminum-based conductive layer 102 and also make the electrochemical apparatus have a higher energy density.

In some embodiments, the thickness $D_3$ of the protective layer 103 may be 200nm, 180nm, 150nm, 120nm, 100nm, 80nm, 60nm, 55nm, 50nm, 45nm, 40nm, 30nm, 20nm, 18nm, 15nm, 12nm, 10nm, 8nm, 5nm, 2nm, or 1nm, and the thickness $D_3$ of the protective layer 103 may be in a range formed by any two of the foregoing values. Preferably, $5nm \leq D_3 \leq 200nm$, or more preferably, $10nm \leq D_3 \leq 200nm$.

Further, when the protective layer 103 is disposed on two surfaces of the aluminum-based conductive layer 102, a thickness $D_a$ of the upper protective layer is $1nm \leq D_a \leq 200nm$ and $D_a \leq 0.1D_1$, and a thickness $D_b$ of the lower protective layer is $1nm \leq D_b \leq 200nm$ and $D_b \leq 0.1D_1$. Preferably, $D_a$ and $D_b$ satisfy $D_a > D_b$, so that the protective layer 103 better protects the aluminum-based conductive layer 102, and the electrochemical apparatus has a higher energy density.

More preferably, $0.5D_a \leq D_b \leq 0.8D_a$.

The aluminum-based conductive layer 102 may be formed on the support layer 101 by means of at least one of mechanical rolling, bonding, vapor deposition (vapor deposition), electroless plating (Electroless plating), and electroplating (electroplating). Preferably, vapor deposition and electroplating are used, that is, the aluminum-based conductive layer 102 is preferably a vapor deposition layer or an electroplating layer, so as to increase the bonding force between the aluminum-based conductive layer 102 and the support layer 101, and make the support layer 101 effectively play a supporting role for the aluminum-based conductive layer 102.

Preferably, the bonding force between the support layer 101 and the aluminum-based conductive layer 102 is $F \geq 100N/m$, or more preferably $F \geq 400N/m$.

For example, the aluminum-based conductive layer 102 is formed on the support layer 101 by using the vapor deposition method. Conditions of the vapor deposition process such as a deposition temperature, a deposition rate, and an atmosphere condition of a deposition chamber are properly controlled to make the sheet resistance growth rate of the aluminum-based conductive layer 102 meet the aforementioned requirement when the positive current collector 10 is stretched.

The vapor deposition method is preferably a physical vapor deposition (Physical Vapor Deposition, PVD) method. The physical vapor deposition method is preferably at least one of an evaporation method and a sputtering method. The evaporation method is preferably at least one of a vacuum evaporation method, a thermal evaporation method, and an electron beam evaporation method. The sputtering method is preferably a magnetron sputtering method.

As an example, forming the aluminum-based conductive layer 102 by using the vacuum evaporation method includes: placing the surface-cleaned support layer 101 in a vacuum plating chamber, melting and evaporating a high-purity metal wire in a metal evaporation chamber at a high temperature of 1300°C to 2000°C, and processing the evaporated metal by using a cooling system in the vacuum plating chamber, to finally obtain a deposition on the support layer 101 to form the aluminum-based conductive layer 102.

A process of forming the aluminum-based conductive layer 102 by using the mechanical rolling method may include: placing an aluminum sheet or an aluminum alloy sheet in a mechanical roller, rolling the aluminum sheet or the aluminum alloy sheet to a predetermined thickness by applying a pressure of 20t to 40t, placing the aluminum sheet or the aluminum alloy sheet on a surface of the surface-cleaned support layer 101, and then placing the two in the mechanical roller, so as to tightly combine the two by applying a pressure of 30t to 50t.

A process of forming the aluminum-based conductive layer 102 by means of bonding may include: placing an aluminum sheet or an aluminum alloy sheet in the mechanical roller, rolling the aluminum sheet or the aluminum alloy sheet to a predetermined thickness by applying a pressure of 20t to 40t, coating a mixed solution of polyvinylidene fluoride (PVDF) and N-methylpyrrolidone (NMP) on a surface of the surface-cleaned support layer 101, finally bonding the aluminum-based conductive layer 102 with the predetermined thickness to the surface of the support layer 101, and drying them by heat to make the two tightly combined.

When the positive current collector 10 has the protective layer 103, the protective layer 103 may be formed on the aluminum-based conductive layer 102 by using at least one of the vapor deposition method, an in-situ formation method, and a coating method. The vapor deposition method may be the vapor deposition method described above. The in-situ formation method is preferably an in-situ passivation method, for example, a method for forming a metal oxide passivation layer in an original place on the metal surface. The coating method is preferably at least one of roller coating, extrusion coating, blade coating, and gravure coating.

Preferably, the protective layer 103 is formed on the aluminum-based conductive layer 102 by using at least one of the vapor deposition method and the in-situ formation method, so as to provide a higher bonding force between the aluminum-based conductive layer 102 and the protective layer 103, make the protective layer 103 better protect the positive current collector 10, and ensure higher operating performance for the positive current collector 10.

In this embodiment of this application, if a tensile strain of the positive current collector is set to $\varepsilon$, and $\varepsilon = \Delta L/L \times 100\%$, where $\Delta L$ is an elongation obtained by stretching the positive current collector, and L is an original length of the positive current collector, that is, a length before stretching.

When the tensile strain $\varepsilon$ of the positive current collector is 2.5%, the sheet resistance growth rate T of the aluminum-based conductive layer can be determined through measurement by using a method known in the art: in an example, cutting the positive current collector to obtain a 20mm×200mm sample, measuring a sheet resistance in a central region of the sample by using a four-probe method, recording the sheet resistance as $R_1$, stretching the central region of the sample by using a GOTECH tension tester, configuring initial settings to obtain a sample length of 50mm between jigs, stretching the sample at a speed of 50mm/min and at a stretching distance being 2.5% of the original length of the sample, taking out the stretched sample, testing the sheet resistance of the aluminum-based conductive layer between the jigs, recording the sheet resistance as $R_2$, and calculating, according to a formula $T=(R_2-R_1)/R_1 \times 100\%$, the sheet resistance growth rate T of the aluminum-based conductive layer when the tensile strain of the positive current collector is 2.5%.

The sheet resistance of the aluminum-based conductive layer is tested by using the four-probe method as follows: using the RTS-9 double electric four-probe tester in a test environment with a normal temperature of $23\pm2°C$, 0.1MPa, and relative humidity $\leq65\%$. The test is conducted as follows: cleaning a surface of the sample, placing the sample horizontally on a test bench, placing the four probes to make the probes in good contact with the surface of the aluminum-based conductive layer, adjusting an auto-test mode, calibrating a current range of the sample, measuring the sheet resistance in an appropriate current range, and collecting 8 to 10 data points of the same sample for data measurement accuracy and error analysis; finally, obtaining an average value as the sheet resistance value of the aluminum-based conductive layer.

The volume resistivity of the support layer is a volume resistivity at 20°C, and can be determined through measurement by using a method known in the art. In an example, the test is conducted in a room with a constant temperature, a normal pressure, and a low humidity (20°C, 0.1MPa, RH$\leq$20%). A disk support layer sample with a diameter of 20mm (the sample size can be adjusted based on an actual size of a test instrument) is prepared. The test is conducted by using a tri-electrode surface resistivity method (GBT1410-2006) with an insulation resistance tester (with a precision of 10Q). The test method is as follows: placing the disk sample between two electrodes and applying a potential difference between the two electrodes to distribute generated current in the disk sample, and using a picoammeter or electrometer for measuring to avoid measurement errors caused by inclusion of a surface leakage current during measurement. A reading is the volume resistivity in units of $\Omega\cdot m$.

An elongation at break of the support layer may be determined through measurement by using a method known in the art: in an example, cutting the support layer to obtain a sample of 15mm$\times$200mm, conducting a tension test at a normal temperature and a normal pressure (25°C, 0.1MPa) by using a GOTECH tension tester, configuring initial settings to obtain a sample length of 50mm between jigs, stretching the sample at a speed of 50mm/min, and recording a device displacement y (mm) upon breakage out of stretching; finally calculating the elongation at break based on (y/50)$\times$100%. The elongation at break of the aluminum-based conductive layer can be easily determined through measurement by using the same method.

A Young's modulus E of the support layer can be determined through measurement by a method known in the art: in an example, cutting the support layer to obtain a sample of 15mm$\times$200mm, measuring a sample thickness $l$ ($\mu m$) by using a micrometer, conducting a tension test at a normal temperature and a normal pressure (25°C, 0.1MPa) by using a GOTECH tension tester, configuring initial settings to obtain a sample length of 50mm between jigs, stretching the sample at a speed of 50mm/min, recording a load Q (N) and a device displacement $z$ (mm) upon breakage out of stretching, where the stress $\xi$(GPa)=Q/(15$\times l$) and the strain $\eta$=$z$/50, drawing a stress-strain curve, and obtaining an initial linear curve, where a slope of the curve is the Young's modulus E.

A density of the aluminum-based conductive layer may be determined through measurement by using a method known in the art: in an example, cutting a positive current collector with an area of 10cm$^2$, using a balance accurate to 0.0001g to obtain a weigh denoted by $m_1$ in units of g, and measuring the thickness at 20 positions by using a micrometer to obtain an average value denoted by $d_1$ in units of $\mu m$; immersing the positive current collector in 1mol/L NaOH solution for 1 min, waiting until the aluminum-based conductive layer is fully dissolved, taking out the support layer to rinse with deionized water for 5 times, baking the support layer at 100°C for 20 min, using the same balance to obtain a weigh denoted by $m_2$ in units of g, measuring the thickness at 20 positions by using the same micrometer to obtain an average value denoted by $d_2$ in units of $\mu m$, and calculating the density of the aluminum-based conductive layer in units of g/cm$^3$ according to the following formula:

$$\text{Density of the aluminum-based conductive layer} = \frac{(m_1 - m_2)}{(d_1 - d_2)/1000}$$

Five same-size positive current collectors are separately tested to obtain the density of the aluminum-based conductive layer and use an average value as the result.

The volume resistivity of the aluminum-based conductive layer is set to $\rho$, and $\rho$=R$_S$$\times$d, where a unit of $\rho$ is $\Omega\cdot m$, R$_S$ is the sheet resistance of the aluminum-based conductive layer in units of Q, and d is the thickness of the aluminum-based conductive layer in units of m. For measuring the sheet resistance R$_S$ of the aluminum-based conductive layer, refer to the four-probe method described above. Details are not repeated herein.

The bonding force F between the support layer and the aluminum-based conductive layer may be tested by using a method known in the art: for example, selecting the positive current collector whose aluminum-based conductive layer disposed on one surface of the support layer as a to-be-tested sample at a width $h$ of 0.02m, evenly attaching a 3M double-sided adhesive to a stainless steel plate at a normal temperature and a normal pressure (25°C, 0.1MPa), evenly attaching the to-be-tested sample to the double-sided adhesive, peeling the aluminum-based conductive layer from the support layer of the to-be-tested sample by using the GOTECH tension tester, obtaining a maximum tensile force x (N) based on readings of a tensile force and displacement diagram, and calculating the bonding force F (N/m) between the aluminum-based conductive layer and the support layer according to F=x/h.

Positive electrode plate

A second aspect of the embodiments of this application provides a positive electrode plate, including a positive current collector and a positive electrode active material layer that are laminated, where the positive current collector is the positive current collector 10 according to the first aspect of the embodiments of this application.

With the positive current collector 10 in the first aspect of this embodiment of this application, the positive electrode plate in this embodiment of this application has a smaller weight and higher electrochemical performance than a conventional positive electrode plate.

As an example, the positive electrode plate includes a support layer 101, an aluminum-based conductive layer 102, and a positive electrode active material layer that are laminated. The support layer 101 includes a first surface 101a and/or a second surface 101b that are opposite, the aluminum-based conductive layer 102 is disposed on the first surface 101a and/or the second surface 101b of the support layer 101, and the positive electrode active material layer is disposed on a surface of the aluminum-based conductive layer 102 facing away from the support layer 101.

For the positive electrode plate in this embodiment of this application, the positive electrode active material layer may use a positive electrode active material known in the art, supporting reversible embedding/de-embedding of active ions.

For example, the positive electrode active material for the lithium-ion secondary battery may be a lithium transition metal compound oxide, where the transition metal may be one or more of Mn, Fe, Ni, Co, Cr, Ti, Zn, V, Al, Zr, Ce, and Mg. Elements with high electronegativity, such as one or more of S, F, Cl, and I, may be also added to the lithium transition metal composite oxide, so that the positive electrode active material has higher structural stability and higher electrochemical performance. As an example, the lithium transition metal composite oxide is, for example, one or more of $LiMn_2O_4$, $LiNiO_2$, $LiCoO_2$, $LiNi_{1-y}Co_yC_2$ ($0<y<1$), $LiNi_aCo_bAl_{1-a-b}O_2$ ($0<a<1$, $0<b<1$, $0<a+b<1$), $LiMn_{1-m-n}Ni_mCo_nO_2$ ($0<m<1$, $0<n<1$, $0<m+n<1$), $LiMPO_4$ (M may be one or more of Fe, Mn, and Co), and $Li_3V_2(PO_4)_3$.

Optionally, the positive electrode active material layer may further include a conductive agent. As an example, the conductive agent is one or more of graphite, superconducting carbon, acetylene black, carbon black, Ketjen black, carbon dots, carbon nanotube, graphene, and carbon nanofiber.

Optionally, the positive electrode active material layer may further include a binder. As an example, the binder is one or more of styrene-butadiene rubber (SBR), water-based acrylic resin (water-based acrylic resin), carboxymethyl cellulose (CMC), polyvinylidene fluoride (PVDF), polytetrafluoroethylene (PTFE), ethylene vinyl acetate copolymer (EVA), polyvinyl alcohol (PVA), and polyvinyl butyral (PVB).

The positive electrode plate may be prepared by using a conventional method in the art. Usually, the positive electrode active material and optionally, the conductive agent and the binder are dispersed in a solvent (such as N-methylpyrrolidone, NMP for short) to obtain a uniform positive electrode paste. The positive electrode paste is coated on the positive current collector and undergoes processes such as drying to obtain the positive electrode plate.

Electrochemical apparatus

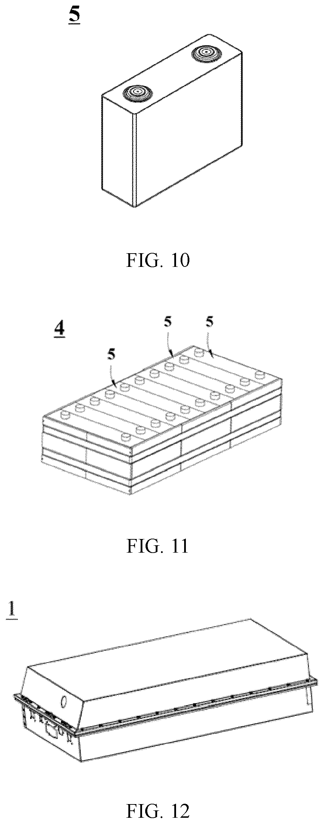

A third aspect of the embodiments of this application provides an electrochemical apparatus, where the electrochemical apparatus includes a positive electrode plate, a negative electrode plate, a separator, and an electrolyte, where the positive electrode plate is the positive electrode plate according to the second aspect of the embodiments of this application. In some embodiments, refer to FIG. 10.

The electrochemical apparatus may be a lithium-ion secondary battery, a lithium primary battery, a sodium-ion battery, or a magnesium-ion battery, which is not limited thereto.

The electrochemical apparatus uses the positive electrode plate according to the second aspect of the embodiments of this application, so that the electrochemical apparatus in this embodiment of this application has a higher weight energy density and higher electrochemical performance.

The negative electrode plate may include a negative current collector and a negative electrode active material layer.

The negative current collector may be a metal foil or a porous metal foil including one or more of copper, copper alloy, nickel, nickel alloy, iron, iron alloy, titanium, titanium alloy, silver, and silver alloy.

The negative electrode active material layer may use a negative electrode active material known in the art, supporting reversible embedding/de-embedding of active ions.

For example, the negative electrode active material for the lithium-ion secondary battery may be one or more of metal lithium, natural graphite, artificial graphite, mesophase carbon microbeads (MCMB for short), hard carbon, soft carbon, silicon, silicon-carbon composite, SiO, Li-Sn alloy, Li-Sn-O alloy, Sn, SnO, $SnO_2$, spinel-structure lithium titanate, and Li-Al alloy.

Optionally, the negative electrode active material layer may further include a binder. As an example, the binder is one or more of styrene-butadiene rubber (SBR), water-based acrylic resin (water-based acrylic resin), carboxymethyl cellulose (CMC), polyvinylidene fluoride (PVDF), polytetrafluoroethylene (PTFE), ethylene vinyl acetate copolymer (EVA), polyvinyl alcohol (PVA), and polyvinyl butyral (PVB).

Optionally, the negative electrode active material layer may further include a conductive agent. As an example, the conductive agent is one or more of graphite, superconducting carbon, acetylene black, carbon black, Ketjen black, carbon dots, carbon nanotube, graphene, and carbon nanofiber.

The negative electrode plate may be prepared by using a conventional method in the art. Usually, the negative electrode active material and optionally the conductive agent and the binder are dispersed in a solvent. The solvent may be NMP or deionized water to obtain a uniform negative electrode paste. The negative electrode paste is coated on the negative current collector and undergoes processes such as drying to obtain the negative electrode plate.

There is no particular limitation on the aforementioned separator, and any known porous separators with electrochemical and chemical stability can be selected, for example, mono-layer or multi-layer membranes made of one or more of glass fiber, nonwoven fabric, polyethylene, polypropylene, and polyvinylidene fluoride may be used.

The electrolyte includes an organic solvent and electrolyte salt. The organic solvent, as a medium for transferring ions in electrochemical reactions, may use an organic solvent for the electrolyte of the electrochemical apparatus known in the art. The electrolyte salt, as a source of ions, may be electrolyte salt for the electrolyte of the electrochemical apparatus known in the art.

For example, the organic solvent used in the lithium-ion secondary batteries may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

For example, the electrolytic salt used in the lithium-ion secondary batteries may be one or more of $LiPF_6$ (lithium hexafluorophosphate), LiBF4 (lithium tetrafluoroborate), $LiClO_4$ (lithium perchlorate), $LiAsF_6$ (lithium hexafluoroborate), LiFSI (lithium bisfluorosulfonyl imide), LiTFSI (lithium bis-trifluoromethanesulfon imide), LiTFS (lithium trifluoromethanesulfonat), LiDFOB (lithium difluorooxalatoborate), LiBOB (lithium bisoxalatoborate), $LiPO_2F_2$ (lithium difluorophosphate), LiDFOP (lithium difluorophosphate), and LiTFOP (lithium tetrafluoro oxalate phosphate).

The positive electrode plate, the separator, and the negative electrode plate are stacked in sequence, so that the separator is isolated between the positive electrode plate and the negative electrode plate to obtain a battery core, or are wound to obtain the battery core. To prepare the electrochemical apparatus, the battery core is placed in a packing housing and the electrolyte was injected and sealed.

Battery module

A fourth aspect of the embodiments of this application provides a battery module, where the battery module includes any one or more of the electrochemical apparatuses according to the third aspect of this application.

Further, a quantity of electrochemical apparatuses included in the battery module may be adjusted based on application and a capacity of the battery module.

In some embodiments, referring to FIG. 11, in a battery module 4, a plurality of electrochemical apparatuses 5 may be arranged in sequence along a length direction of the battery module 4, or certainly, may be arranged in any other manners. Further, the plurality of electrochemical apparatuses 5 may be secured by using fasteners.

Optionally, the battery module 4 may further include a housing having an accommodating space, and the plurality of electrochemical apparatuses 5 are accommodated in the accommodating space.

Battery pack

A fifth aspect of the embodiments of this application provides a battery pack, where the battery pack includes any one or more of the battery modules according to the fourth aspect of this application. That is, the battery pack includes any one or more of electrochemical apparatuses according to the third aspect of this application.

A quantity of battery modules in the battery pack may be adjusted based on application and a capacity of the battery pack.

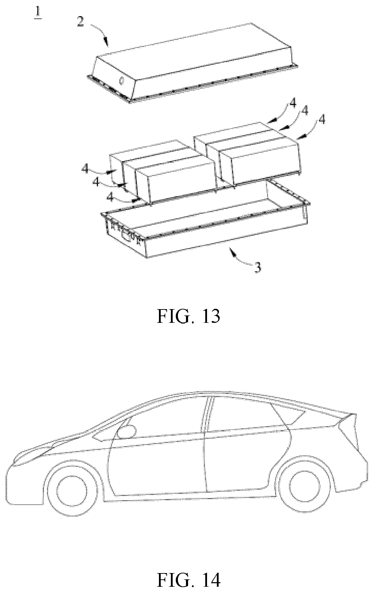

In some embodiments, referring to FIG. 12 and FIG. 13, the battery pack 1 may include a battery box and a plurality of battery modules 4 disposed in the battery box. The battery box includes an upper case 2 and a lower case 3. The upper case 2 may cover the lower case 3 to form a closed space for accommodating the battery modules 4. The plurality of battery modules 4 may be arranged in the battery box in any manner.

Device

A sixth aspect of the embodiments of this application provides a device, where the device includes any one or more of the electrochemical apparatuses according to the third aspect of this application. The electrochemical apparatus may be used as a power supply for the device.

Preferably, the device may be, but is not limited to, a mobile device (for example, a mobile phone or a notebook computer), an electric vehicle (for example, a full electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

For example, FIG. 14 illustrates a device including the electrochemical apparatus of this application. The device is a full electric vehicle, a hybrid electric vehicle, a plug-in hybrid electric vehicle, and the like, and the electrochemical apparatus of this application supplies power to the device.

The battery module, the battery pack, and the device in this application include the electrochemical apparatus provided in this application, and therefore have at least the same advantages as the electrochemical apparatus. Details are not described herein again.

Embodiments

Content disclosed in this application is described in more detail in the following embodiments. These embodiments are intended only for illustrative purposes because various modifications and changes made without departing from the scope of the content disclosed in this application are apparent to those skilled in the art. Unless otherwise stated, all parts, percentages, and ratios reported in the following embodiments are based on weights, all reagents used in the embodiments are commercially available or synthesized in a conventional manner, and can be used directly without further processing, and all instruments used in the embodiments are commercially available.

Preparation method

Preparation of the positive current collector

Select a support layer with a predetermined thickness, perform surface cleaning treatment, place the surface-cleaned support layer in a vacuum plating chamber, melt and evaporate a high-purity aluminum wire in a metal evaporating chamber at a high temperature of 1300°C to 2000°C, and process the evaporated aluminum by using a cooling system in the vacuum plating chamber, to finally obtain a deposition on two surfaces of the support layer to form an aluminum-based conductive layer.

A material, thickness, and density of the conductive layer and preparation processing conditions (such as vacuum, atmosphere, humidity, and temperature) can be adjusted, and a material and thickness of the support layer can be adjusted, so as to obtain different T values for the positive current collector.

Preparation of the positive electrode plate

Fully stir and mix a positive electrode active material $LiNi_{1/3}Co_{1/3}Mn_{1/3}O_2$ (NCM333 for short), conductive carbon black, and polyvinylidene fluoride (PVDF) in an appropriate amount of N-methylpyrrolidone (NMP) solvent at a weight ratio of 93:2:5 to obtain a uniform positive electrode paste, coat the positive electrode paste on the positive current collector, and conduct processes such as drying to obtain the positive electrode plate.

Conventional positive current collector

An aluminum foil with a thickness of $12\mu$m.

Conventional positive electrode plate

Different from the positive electrode plate in the foregoing embodiments of this application, a conventional positive current collector is used.

Negative current collector

A copper foil with a thickness of $8\mu$m.

Preparation of the negative electrode plate

Fully stir and mix a negative electrode active material graphite, conductive carbon black, a thickener sodium carboxymethyl cellulose (CMC), and a binder styrene-butadiene rubber emulsion (SBR) in an appropriate amount of deionized water at a weight ratio of 96.5:1.0:1.0:1.5 to obtain a uniform negative electrode paste, coat the negative electrode paste on the negative current collector, and conduct processes such as drying to obtain the negative electrode plate.

Preparation of the electrolyte

Evenly mix ethylene carbonate (EC) and ethyl methyl carbonate (EMC) at a volume ratio of 3:7 to obtain an organic solvent, and then evenly dissolve 1mol/L $LiPF_6$ in the organic solvent.

Preparation of the lithium-ion secondary battery

Laminate the positive electrode plate, the separator (PP/PE/PP composite film), and the negative electrode plate in sequence, wind them into a battery core, pack the battery core into a packing housing, inject the electrolyte into the battery core, and conduct processes such as sealing, waiting, hot pressing, cold pressing, and formation, to obtain the lithium-ion secondary battery.

Test method

1. Conduct testing on the positive current collector by using the test method described above.
2. Battery performance testing

(1) Cyclic performance test

At 45°C, charge the lithium-ion secondary battery to 4.2V at a constant current rate of 1C, charge the battery to a current less than or equal to 0.05C at a constant voltage, and then discharge the battery to 2.8V at a constant current rate of 1C. This is a charge and discharge cycle, and a discharge capacity this time is a discharge capacity of the first cycle. The lithium-ion secondary battery is charged and discharged for 1000 cycles by using the foregoing method, and a discharge capacity of the 1000th cycles is recorded.

Capacity retention rate (%) of the lithium-ion secondary battery after 1000 cycles at 45°C and 1C/1C=Discharge capacity of the 1000th cycle/Discharge capacity of the 1st cycle×100%

Test result

1. Electrical performance of the positive current collector of this application

Table 1

| Serial number | Conductive layer | | | | Support layer | | | | T % |
|---|---|---|---|---|---|---|---|---|---|
| | Material | $D_1$ μm | Density g/cm³ | Volume resistivity Ω·m | Material | $D_2$μm | Volume resistivity Ω·m | E GPa | |
| Positive current collector 1 | Al | 2.0 | 2.6 | $3.7\times10^{-8}$ | PET | 10 | $2.1\times10^{14}$ | 4.2 | 3 |
| Positive current collector 2 | Al | 1.5 | 2.6 | $3.7\times10^{-8}$ | PET | 10 | $2.1\times10^{14}$ | 4.2 | 5 |

(continued)

| Serial number | Conductive layer | | | | Support layer | | | | T % |
|---|---|---|---|---|---|---|---|---|---|
| | Material | $D_1$ $\mu m$ | Density g/cm³ | Volume resistivity $\Omega \cdot m$ | Material | $D_2 \mu m$ | Volume resistivity $\Omega \cdot m$ | E GPa | |
| Positive current collector 3 | Al | 1.2 | 2.7 | $2.7 \times 10^{-8}$ | PET | 10 | $2.1 \times 10^{14}$ | 4.2 | 0 |
| Positive current collector 4 | Al | 1.0 | 2.6 | $3.7 \times 10^{-8}$ | PET | 10 | $2.1 \times 10^{14}$ | 4.2 | 7 |
| Positive current collector 5 | Al | 0.9 | 2.5 | $5.5 \times 10^{-8}$ | PET | 10 | $2.1 \times 10^{14}$ | 4.2 | 53 |
| Positive current collector 6 | Al | 0.9 | 2.6 | $3.7 \times 10^{-8}$ | PI | 10 | $2.1 \times 10^{14}$ | 1.9 | 37 |
| Positive current collector 7 | Al | 0.9 | 2.7 | $2.7 \times 10^{-8}$ | PP | 10 | $2.1 \times 10^{14}$ | 2.2 | 0 |
| Positive current collector 8 | Al | 0.8 | 2.7 | $2.7 \times 10^{-8}$ | PPS | 10 | $2.1 \times 10^{14}$ | 4.0 | 0 |
| Positive current collector 9 | Aluminum alloy | 1.0 | 2.8 | $3.0 \times 10^{-8}$ | PET | 10 | $2.1 \times 10^{14}$ | 4.2 | 2 |
| Positive current collector 10 | Al | 0.6 | 2.6 | $3.7 \times 10^{-8}$ | PEN | 10 | $2.1 \times 10^{14}$ | 5.1 | 10 |
| Positive current collector 11 | Al | 0.5 | 2.6 | $3.7 \times 10^{-8}$ | PEN | 10 | $2.1 \times 10^{14}$ | 5.1 | 15 |
| Positive current collector 12 | Al | 0.3 | 2.6 | $3.7 \times 10^{-8}$ | PEN | 10 | $2.1 \times 10^{14}$ | 5.1 | 21 |
| Conventional positive current collector | Al | 12 | / | $2.8 \times 10^{-8}$ | / | / | / | / | / |
| Comparison current collector 1 | Al | 0.9 | 2.4 | $7.2 \times 10^{-8}$ | PET | 10 | $2.1 \times 10^{14}$ | 9.1 | 92 |
| Comparison current collector 2 | Aluminum alloy | 1.0 | 2.3 | $15.1 \times 10^{-8}$ | PET | 10 | $2.1 \times 10^{14}$ | 4.2 | 210 |

In Table 1, the aluminum alloy uses aluminum alloy 7049 (aluminum-zinc alloy made by the American company Finkl Steel.

An overcurrent test is conducted on the positive current collectors in Table 1. The positive current collector is cut to a width of 100mm, and a positive electrode active material layer 80mm wide is coated in the middle of the width direction and is rolled to form a positive electrode plate. The electrode plate obtained by rolling is cut into strips of 100mm×30mm in the width direction, with 10 pieces for each electrode plate. During testing, non-coated conductive areas on both sides of the electrode plate sample are connected to positive and negative terminals of a charge and discharge machine, and then the charge and discharge machine is set to allow a 1.2A current to pass through the electrode plate for 10s. The test is successful if the electrode plate does not blow; otherwise, the test fails. 10 samples in each sample set were tested, and the overcurrent test results are shown in Table 2 below.

**Table 2**

| Number of positive electrode plate | Number of positive current collector | Overcurrent test pass rate (%) |
|---|---|---|
| Positive electrode plate 1 | Positive current collector 1 | 100 |
| Positive electrode plate 2 | Positive current collector 2 | 100 |

(continued)

| Number of positive electrode plate | Number of positive current collector | Overcurrent test pass rate (%) |
|---|---|---|
| Positive electrode plate 3 | Positive current collector 3 | 100 |
| Positive electrode plate 4 | Positive current collector 4 | 100 |
| Positive electrode plate 5 | Positive current collector 5 | 60 |
| Positive electrode plate 6 | Positive current collector 6 | 70 |
| Positive electrode plate 7 | Positive current collector 7 | 100 |
| Positive electrode plate 8 | Positive current collector 8 | 100 |
| Positive electrode plate 9 | Positive current collector 9 | 100 |
| Positive electrode plate 10 | Positive current collector 10 | 100 |
| Positive electrode plate 11 | Positive current collector 11 | 90 |
| Positive electrode plate 12 | Positive current collector 12 | 80 |
| Conventional positive electrode plate | Conventional positive current collector | 100 |
| Comparison electrode plate 1 | Comparison current collector 1 | 0 |
| Comparison electrode plate 2 | Comparison current collector 2 | 0 |

It can be seen from the data in Table 2 that when the density of the aluminum-based conductive layer of the positive current collector is not 2.5g/cm$^3$ to 2.8g/cm$^3$, the tensile strain of the positive current collector is 2.5%, and the sheet resistance growth rate T of the aluminum-based conductive layer is greater than 10%, the positive current collector has poor electrical performance. For example, the comparison electrode plates 1 and 2 have a low pass rate in the overcurrent test, with little practical value for battery products. In the positive current collector in the embodiments of this application, when the density of the aluminum-based conductive layer is 2.5g/cm$^3$ to 2.8g/cm$^3$, the tensile strain of the positive current collector is 2.5%, and the sheet resistance growth rate T of the aluminum-based conductive layer is less than 10%, the positive current collector has better electrical performance and a significantly increased pass rate up to 100% in the overcurrent test.
Therefore, the electrochemical performance of the battery can be improved by using the positive current collector in the embodiments of this application.
Preferably T≤5%, more preferably T≤2%, or still more preferably T≤1%.

2. Impact of the protective layer on electrochemical performance of the electrochemical apparatus

**Table 3**

| Number of positive electrode plate | Lower protective layer | | Upper protective layer | |
|---|---|---|---|---|
| | Material | $D_b$ (nm) | Material | $D_a$ (nm) |
| Positive current collector 4 | / | / | / | / |
| Positive current collector 4-1 | / | / | Nickel | 1 |
| Positive current collector 4-2 | / | / | Nickel oxide | 10 |
| Positive current collector 4-3 | / | / | Aluminum oxide | 50 |
| Positive current collector 4-4 | / | / | Nickel oxide | 100 |
| Positive current collector 4-5 | Nickel | 5 | / | / |
| Positive current collector 4-6 | Aluminum oxide | 20 | / | / |
| Positive current collector 4-7 | Aluminum oxide | 80 | / | / |
| Positive current collector 4-8 | Nickel oxide | 100 | / | / |

(continued)

| Number of positive electrode plate | Lower protective layer | | Upper protective layer | |
| --- | --- | --- | --- | --- |
| | Material | $D_b$ (nm) | Material | $D_a$ (nm) |
| Positive current collector 4-9 | Nickel | 5 | Nickel | 10 |
| Positive current collector 4-10 | Nickel oxide | 8 | Nickel oxide | 10 |
| Positive current collector 4-11 | Aluminum oxide | 20 | Nickel oxide | 50 |
| Positive current collector 4-12 | Nickel oxide | 30 | Aluminum oxide | 50 |
| Positive current collector 4-13 | Aluminum oxide | 50 | Aluminum oxide | 100 |

In Table 3, a protective layer is disposed on the positive current collector 4 for all the positive current collectors 4-1 to 4-13.

### Table 4

| Number of battery | Number of positive current collector | Capacity retention rate after 1000 cycles at 45°C and 1C/1C (%) |
| --- | --- | --- |
| Conventional battery 1 | Conventional positive current collector | 86.5 |
| Battery 4 | Positive current collector 4 | 77.3 |
| Battery 4-1 | Positive current collector 4-1 | 78.1 |
| Battery 4-2 | Positive current collector 4-2 | 79.4 |
| Battery 4-3 | Positive current collector 4-3 | 79.9 |
| Battery 4-4 | Positive current collector 4-4 | 78.9 |
| Battery 4-5 | Positive current collector 4-5 | 78.2 |
| Battery 4-6 | Positive current collector 4-6 | 79.5 |
| Battery 4-7 | Positive current collector 4-7 | 80.6 |
| Battery 4-8 | Positive current collector 4-8 | 79.8 |
| Battery 4-9 | Positive current collector 4-9 | 81.8 |
| Battery 4-10 | Positive current collector 4-10 | 83.9 |
| Battery 4-11 | Positive current collector 4-11 | 87.1 |
| Battery 4-12 | Positive current collector 4-12 | 87.6 |
| Battery 4-13 | Positive current collector 4-13 | 87.3 |

The battery using the positive current collector of this application has a good cycle life, and especially for the battery made of the positive current collector provided with the protective layer, the capacity retention rate after 1000 cycles at 45°C and 1C/1C is further improved, indicating better battery reliability.

3. Role of the positive current collector of this application in improving the weight energy density of the electrochemical apparatus

**Table 5**

| Number of positive current collector | Support layer | | Aluminum-based conductive layer | | Thickness of the positive current collector ($\mu$m) | Weight percent composition of the positive current collector (%) |
|---|---|---|---|---|---|---|
| | Material | $D_2$ ($\mu$m) | Material | $D_1$ ($\mu$m) | | |
| Positive current collector 41 | PET | 10 | Al | 0.5 | 11 | 50 |
| Positive current collector 42 | PI | 6 | Al | 0.3 | 6.6 | 30 |
| Positive current collector 43 | PI | 5 | Al | 1.5 | 8.0 | 45.8 |
| Positive current collector 44 | PET | 4 | Al | 0.9 | 5.8 | 31.7 |
| Positive current collector 45 | PI | 3 | Al | 0.2 | 3.4 | 16.7 |
| Positive current collector 46 | PI | 1 | Al | 0.4 | 1.8 | 10.8 |
| Conventional positive current collector | / | / | Al | / | 12 | 100 |

In Table 5, the weight percent composition of the positive current collector refers to a percentage obtained by dividing the weight of the positive current collector per unit area by the weight of the conventional positive current collector per unit area.

Compared with the conventional aluminum-foil positive current collector, the weights of the positive current collectors in the embodiments of this application are all reduced at different degrees, thereby improving the weight energy density of the battery.

The foregoing descriptions are merely specific embodiments of this application, but are not intended to limit the protection scope of this application.

The invention is defined by the appended claims.

**Claims**

1. A positive current collector (10), comprising:

   a support layer (101), having two opposite surfaces in a thickness direction of the support layer (101); and
   an aluminum-based conductive layer (102), disposed on at least one of the two surfaces of the support layer (101); wherein
   a thickness $D_1$ of the aluminum-based conductive layer (102) is 300nm$\leq D_1 \leq 2\mu$m, preferably 500nm$\leq D_1 \leq 1.5\mu$m;
   a density of the aluminum-based conductive layer (102) is 2.5g/cm$^3$ to 2.8g/cm$^3$; and
   when a tensile strain of the positive current collector (10) is 2.5%, a sheet resistance growth rate T of the aluminum-based conductive layer (102) is T$\leq$10%, preferably T$\leq$5%, preferably T$\leq$2%, preferably T$\leq$1%;
   wherein an elongation at break of the support layer (101) is greater than or equal to an elongation at break of the aluminum-based conductive layer (102).

2. The positive current collector (10) according to claim 1, wherein

   a volume resistivity of the support layer (101) is greater than or equal to $1.0 \times 10^{-5}$ $\Omega \cdot$m; and/or
   a volume resistivity of the aluminum-based conductive layer (102) is $2.5 \times 10^{-8}$ $\Omega \cdot$m to $7.8 \times 10^{-8}$ $\Omega \cdot$m, preferably $2.5 \times 10^{-8}$ $\Omega \cdot$m to $3.8 \times 10^{-8}$ $\Omega \cdot$m.

3. The positive current collector (10) according to claim 1 or 2, wherein a material of the aluminum-based conductive layer (102) is aluminum or an aluminum alloy; and
preferably, a weight percent composition of the aluminum element in the aluminum alloy is more than 90%.

4. The positive current collector (10) according to claim 1, further comprising a protective layer (103), wherein the protective layer (103) is disposed on at least one of two opposite surfaces of the aluminum-based conductive layer (102) in a thickness direction of the aluminum-based conductive layer (102);

the protective layer (103) comprises one or more of metal, metal oxide, and conductive carbon, preferably comprising one or more of nickel, chromium, nickel-based alloy, copper-based alloy, aluminum oxide, cobalt oxide, chromium oxide, nickel oxide, graphite, superconducting carbon, acetylene black, carbon black, Ketjen black, carbon dots, carbon nanotube, graphene, and carbon nanofiber; and
preferably, a thickness $D_3$ of the protective layer (103) is $1nm \leq D_3 \leq 200nm$, and $D_3 \leq 0.1D_1$.

5. The positive current collector (10) according to claim 4, wherein the protective layer (103) comprises an upper protective layer disposed on a surface of the aluminum-based conductive layer (102) facing the support layer (101) and a lower protective layer disposed on a surface of the aluminum-based conductive layer (102) facing away from the support layer (101);

a thickness $D_a$ of the upper protective layer is $1nm \leq D_a \leq 200nm$ and $D_a \leq 0.1D_1$, a thickness $D_b$ of the lower protective layer is $1nm \leq D_b \leq 200nm$ and $D_b \leq 0.1D_1$, and $D_a$ and $D_b$ meet $D_a > D_b$, preferably, $0.5D_a \leq D_b \leq 0.8D_a$; and
preferably, both the upper protective layer and the lower protective layer are metal oxide protective layers.

6. The positive current collector (10) according to claim 1, wherein the support layer (101) comprises one or more of a polymer material and a polymer-based composite material;

preferably, the polymer material is one or more of polyamide, polyimide, polyethylene terephthalate, polybutylene terephthalate, polyethylene naphthalate, polycarbonate, polyethylene, polypropylene, poly(p-phenylene ether), acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyformaldehyde, polyphenylene oxide, polyphenylene sulfone, polyethylene glycol, polysulfur nitride polymer material, polyphenyl, polypyrrole, polyaniline, polythiophene, polypyridine, cellulose, starch, protein, epoxy resin, phenol-formaldehyde resin, a derivative of the foregoing materials, a crosslinked product of the foregoing materials, and a copolymer of the foregoing materials;
preferably, the polymer-based composite material comprises the polymer material and an additive, and the additive comprises one or more of a metal material and an inorganic non-metal material; and/or
a thickness $D_2$ of the support layer (101) is $1\mu m \leq D_2 \leq 20\mu m$, preferably $2\mu m \leq D_2 \leq 10\mu m$, or more preferably $2\mu m \leq D_2 \leq 6\mu m$.

7. The positive current collector (10) according to claim 1, wherein
a Young's modulus E of the support layer (101) is $E \geq 1.9GPa$, preferably, $4GPa \leq E \leq 20GPa$.

8. The positive current collector (10) according to claim 1 or 7, wherein the aluminum-based conductive layer (102) is a vapor deposition layer or an electroplating layer.

9. A positive electrode plate, wherein the positive electrode plate comprises a positive current collector (10) and a positive electrode active material layer disposed on the positive current collector (10), wherein the positive current collector (10) is the positive current collector (10) according to any one of claims 1 to 8.

10. An electrochemical apparatus (5), wherein the electrochemical apparatus (5) comprises a positive electrode plate, a negative electrode plate, a separator, and an electrolyte, wherein the positive electrode plate is the positive electrode plate according to claim 9.

11. A battery module (4), comprising the electrochemical apparatus (5) according to claim 10.

12. A battery pack (1), comprising the battery module (4) according to claim 11.

13. A device, comprising the electrochemical apparatus (5) according to claim 10, wherein the electrochemical apparatus (5) serves as a power supply of the device; and

preferably, the device comprises a mobile device, an electric vehicle, an electric train, a satellite, a ship, and an energy storage system.

**Patentansprüche**

1. Positiver Stromkollektor (10), umfassend:

   eine Trägerschicht (101), die zwei gegenüberliegende Oberflächen in einer Dickenrichtung der Trägerschicht (101) aufweist; und
   eine auf Aluminium basierende leitfähige Schicht (102), die auf mindestens einer der zwei Oberflächen der Trägerschicht (101) angeordnet ist; wobei
   eine Dicke $D_1$ der auf Aluminium basierenden leitfähigen Schicht (102) 300 nm $\leq D_1 \leq$ 2 $\mu$m, vorzugsweise 500 nm $\leq D_1 \leq$ 1,5 $\mu$m beträgt;
   eine Dichte der auf Aluminium basierenden leitfähigen Schicht (102) 2,5 g/cm$^3$ bis 2,8 g/cm$^3$ beträgt; und
   wenn eine Zugspannung des positiven Stromkollektors (10) 2,5 % beträgt, eine Flächenwiderstandswachstumsrate T der auf Aluminium basierenden leitfähigen Schicht (102) T $\leq$ 10 %, vorzugsweise T $\leq$ 5 %, vorzugsweise T $\leq$ 2 %, vorzugsweise T $\leq$ 1 % beträgt;
   wobei eine Bruchdehnung der Trägerschicht (101) größer oder gleich einer Bruchdehnung der auf Aluminium basierenden leitfähigen Schicht (102) ist.

2. Positiver Stromkollektor (10) nach Anspruch 1, wobei ein spezifischer Durchgangswiderstand der Trägerschicht (101) größer oder gleich 1,0 $\times$ 10$^{-5}$ Q·m ist; und/oder ein spezifischer Durchgangswiderstand der auf Aluminium basierenden leitfähigen Schicht (102) 2,5 $\times$ 10$^{-8}$ Q·m bis 7,8 $\times$ 10$^{-8}$ Q·m, vorzugsweise 2,5 $\times$ 10$^{-8}$ Q·m bis 3,8 $\times$ 10$^{-8}$ Q·m beträgt.

3. Positiver Stromkollektor (10) nach Anspruch 1 oder 2, wobei es sich bei dem Material der auf Aluminium basierenden leitfähigen Schicht (102) um Aluminium oder eine Aluminiumlegierung handelt; und eine Gewichtsprozentzusammensetzung des Aluminiumelements in der Aluminiumlegierung vorzugsweise höher als 90 % ist.

4. Positiver Stromkollektor (10) nach Anspruch 1, ferner umfassend eine Schutzschicht (103), wobei die Schutzschicht (103) auf mindestens einer der zwei gegenüberliegenden Oberflächen der auf Aluminium basierenden leitfähigen Schicht (102) in einer Dickenrichtung der auf Aluminium basierenden leitfähigen Schicht (102) angeordnet ist; wobei die Schutzschicht (103) eines oder mehrere von Metall, Metalloxid und leitfähigem Kohlenstoff umfasst, vorzugsweise eines oder mehrere von Nickel, Chrom, auf Nickel basierender Legierung, auf Kupfer basierender Legierung, Aluminiumoxid, Cobaltoxid, Chromoxid, Nickeloxid, Graphit, supraleitendem Kohlenstoff, Acetylenruß, Industrieruß, Ketjen Black, Kohlenstoffpunkten, Kohlenstoffnanoröhrchen, Graphen und Kohlenstoffnanofaser umfasst; und vorzugsweise eine Dicke $D_3$ der Schutzschicht (103) 1 nm $\leq D_3 \leq$ 200 nm beträgt und $D_3 \leq$ 0,1 $D_1$ ist.

5. Positiver Stromkollektor (10) nach Anspruch 4, wobei die Schutzschicht (103) eine obere Schutzschicht, die auf einer Oberfläche der auf Aluminium basierenden leitfähigen Schicht (102) angeordnet ist, die der Trägerschicht (101) zugewandt ist, und eine untere Schutzschicht umfasst, die auf einer Oberfläche der auf Aluminium basierenden leitfähigen Schicht (102) angeordnet ist, die von der Trägerschicht (101) abgewandt ist;

   eine Dicke $D_a$ der oberen Schutzschicht 1 nm $\leq D_a \leq$ 200 nm beträgt und $D_a \leq$ 0,1 $D_1$ ist, eine Dicke $D_b$ der unteren Schutzschicht 1 nm $\leq D_b \leq$ 200 nm beträgt und $D_b \leq$ 0,1 $D_1$ ist, und $D_a$ und $D_b$ die Vorgabe $D_a > D_b$, vorzugsweise 0,5 $D_a \leq D_b \leq$ 0,8 $D_a$ erfüllen; und
   es sich vorzugsweise sowohl bei der oberen Schutzschicht als auch der unteren Schutzschicht um Metalloxid-Schutzschichten handelt.

6. Positiver Stromkollektor (10) nach Anspruch 1, wobei die Trägerschicht (101) eines oder mehrere von einem Polymermaterial und einem auf Polymer basierenden Verbundmaterial umfasst;

   es sich bei dem Polymermaterial vorzugsweise um eines oder mehrere von Polyamid, Polyimid, Polyethylenterephthalat, Polybutylenterephthalat, Polyethylennaphthalat, Polycarbonat, Polyethylen, Polypropylen, Poly(p-phenylenether), Acrylonitril-Butadien-Styrol-Copolymer, Polyvinylalkohol, Polystyrol, Polyvinylchlorid, Polyvinylidenfluorid, Polytetrafluorethylen, Natriumpolystyrolsulfonat, Polyacetylen, Silikonkautschuk, Polyformaldehyd, Polyphenylenoxid, Polyphenylensulfon, Polyethylenglycol, Polyschwefelnitrid-Polymermaterial, Polyphenyl, Polypyrrol, Polyanilin, Polythiophen, Polypyridin, Cellulose, Stärke, Protein, Epoxidharz, Phenol-Formaldehyd-Harz, ein Derivat der vorstehenden Materialien, ein vernetztes Produkt der vorstehenden Materialien und ein Copolymer der vorstehenden Materialien handelt;

vorzugsweise das auf Polymer basierende Verbundmaterial das Polymermaterial und ein Additiv umfasst und das Additiv eines oder mehrere von einem Metallmaterial und einem anorganischen Nichtmetallmaterial umfasst; und/oder

eine Dicke $D_2$ der Trägerschicht (101) 1 $\mu$m $\leq D_2 \leq$ 20 $\mu$m, vorzugsweise 2 $\mu$m $\leq D_2 \leq$ 10 $\mu$m oder besonders bevorzugt 2 $\mu$m $\leq D_2 \leq$ 6 $\mu$m beträgt.

7. Positiver Stromkollektor (10) nach Anspruch 1, wobei ein Youngscher E-Modul der Trägerschicht (101) E $\geq$ 1,9 GPa, vorzugsweise 4 GPa $\leq$ E $\leq$ 20 GPa ist.

8. Positiver Stromkollektor (10) nach Anspruch 1 oder 7, wobei es sich bei der auf Aluminium basierenden leitfähigen Schicht (102) um eine Gasphasenabscheidungsschicht oder eine Elektroplattierungsschicht handelt.

9. Positive Elektrodenplatte, wobei die positive Elektrodenplatte einen positiven Stromkollektor (10) und eine positive aktive Elektrodenmaterialschicht umfasst, die auf dem positiven Stromkollektor (10) angeordnet ist, wobei es sich bei dem positiven Stromkollektor (10) um den positiven Stromkollektor (10) nach einem der Ansprüche 1 bis 8 handelt.

10. Elektrochemische Einrichtung (5), wobei die elektrochemische Einrichtung (5) eine positive Elektrodenplatte, eine negative Elektrodenplatte, einen Separator und einen Elektrolyten umfasst, wobei es sich bei der positiven Elektrodenplatte um die positive Elektrodenplatte nach Anspruch 9 handelt.

11. Batteriemodul (4), umfassend die elektrochemische Einrichtung (5) nach Anspruch 10.

12. Batteriepack (1), umfassend das Batteriemodul (4) nach Anspruch 11.

13. Vorrichtung, umfassend die elektrochemische Einrichtung (5) nach Anspruch 10, wobei die elektrochemische Einrichtung (5) als Energieversorgung der Vorrichtung dient; und

die Vorrichtung vorzugsweise eine mobile Vorrichtung, ein Elektrofahrzeug, einen Elektrozug, einen Satelliten, ein Schiff und ein Energiespeichersystem umfasst.

**Revendications**

1. Collecteur de courant positif (10), comprenant :

une couche de support (101), ayant deux surfaces opposées dans une direction de l'épaisseur de la couche de support (101) ; et

une couche conductrice à base d'aluminium (102), disposée sur au moins une des deux surfaces de la couche de support (101) ; dans lequel

une épaisseur $D_1$ de la couche conductrice à base d'aluminium (102) est 300 nm $\leq D_1 \leq$ 2 $\mu$m, de préférence 500 nm $\leq D_1 \leq$ 1,5 $\mu$m ;

une masse volumique de la couche conductrice à base d'aluminium (102) est de 2,5 g/cm$^3$ à 2,8 g/cm$^3$ ; et

quand un effort de traction du collecteur de courant positif (10) est de 2,5 %, un taux de croissance de résistance de couche T de la couche conductrice à base d'aluminium (102) est T $\leq$ 10 %, de préférence T $\leq$ 5 %, de préférence T $\leq$ 2 %, de préférence T $\leq$ 1 % ;

dans lequel un allongement à la rupture de la couche de support (101) est supérieur ou égal à un allongement à la rupture de la couche conductrice à base d'aluminium (102).

2. Collecteur de courant positif (10) selon la revendication 1, dans lequel

une résistivité volumique de la couche de support (101) est supérieure ou égale à 1,0$\times$10$^{-5}$ $\square$·m ; et/ou

une résistivité volumique de la couche conductrice à base d'aluminium (102) est de 2,5$\times$10$^{-8}$ $\square$·m à 7,8$\times$10$^{-8}$ $\square$·m, de préférence 2,5$\times$10$^{-8}$ $\square$·m à 3,8$\times$10$^{-8}$ $\square$·m.

3. Collecteur de courant positif (10) selon la revendication 1 ou 2, dans lequel un matériau de la couche conductrice à base d'aluminium (102) est l'aluminium ou un alliage d'aluminium ; et

de préférence, une composition en pourcentage pondéral de l'aluminium élémentaire dans l'alliage d'aluminium est supérieure à 90 %.

4. Collecteur de courant positif (10) selon la revendication 1, comprenant en outre une couche protectrice (103), dans lequel la couche protectrice (103) est disposée sur au moins une des deux surfaces opposées de la couche conductrice à base d'aluminium (102) dans une direction de l'épaisseur de la couche conductrice à base d'aluminium (102) ;

la couche protectrice (103) comprend un métal, et/ou un oxyde métallique, et/ou du carbone conducteur, comprenant de préférence un ou plusieurs éléments parmi le nickel, le chrome, un alliage à base de nickel, un alliage à base de cuivre, l'oxyde d'aluminium, l'oxyde de cobalt, l'oxyde de chrome, l'oxyde de nickel, le graphite, le carbone supraconducteur, le noir d'acétylène, le noir de carbone, le noir de Ketjen, les points quantiques de carbone, les nanotubes de carbone, le graphène, et les nanofibres de carbone ; et
de préférence, une épaisseur $D_3$ de la couche protectrice (103) est 1 nm $\leq D_3 \leq$ 200 nm, et $D_3 \leq 0,1D_1$.

5. Collecteur de courant positif (10) selon la revendication 4, dans lequel la couche protectrice (103) comprend une couche protectrice supérieure disposée sur une surface de la couche conductrice à base d'aluminium (102) faisant face à la couche de support (101) et une couche protectrice inférieure disposée sur une surface de la couche conductrice à base d'aluminium (102) tournant le dos à la couche de support (101) ;

une épaisseur $D_a$ de la couche protectrice supérieure est 1 nm $\leq D_a \leq$ 200 nm et $D_a \leq 0,1D_1$, une épaisseur $D_b$ de la couche protectrice inférieure est 1 nm $\leq D_b \leq$ 200 nm et $D_b \leq 0,1D_1$, et $D_a$ et $D_b$ respectent $D_a > D_b$, de préférence $0,5D_a \leq D_b \leq 0,8D_a$; et
de préférence, la couche protectrice supérieure et la couche protectrice inférieure sont toutes deux des couches protectrices en oxyde métallique.

6. Collecteur de courant positif (10) selon la revendication 1, dans lequel la couche de support (101) comprend un matériau polymère et/ou un matériau composite à base de polymère ;

de préférence, le matériau polymère en est un ou plusieurs parmi le polyamide, le polyimide, le téréphtalate de polyéthylène, le téréphtalate de polybutylène, le naphtalate de polyéthylène, le polycarbonate, le polyéthylène, le polypropylène, le poly(éther de p-phénylène), un copolymère acrylonitrile-butadiène-styrène, l'alcool polyvinylique, le polystyrène, le polychlorure de vinyle, le polyfluorure de vinylidène, le polytétrafluoroéthylène, le sulfonate de polystyrène sodique, le polyacétylène, le caoutchouc de silicone, le polyformaldéhyde, l'oxyde de polyphénylène, la polyphénylènesulfone, le polyéthylène glycol, un matériau polymère à base de polynitrure de soufre, le polyphényle, le polypyrolle, la polyaniline, le polythiophène, la polypyridine, la cellulose, l'amidon, une protéine, une résine époxy, une résine phénol-formaldéhyde, un dérivé des matériaux précédents, un produit réticulé des matériaux précédents, et un copolymère des matériaux précédents ;
de préférence, le matériau composite à base de polymère comprend le matériau polymère et un additif, et l'additif comprend un matériau métallique et/ou un matériau inorganique non métallique ; et/ou
une épaisseur $D_2$ de la couche de support (101) est 1 $\mu$m $\leq D_2 \leq$ 20 $\mu$m, de préférence 2 $\mu$m $\leq D_2 \leq$ 10 $\mu$m, ou mieux encore 2 $\mu$m $\leq D_2 \leq$ 6 $\mu$m.

7. Collecteur de courant positif (10) selon la revendication 1, dans lequel
un module d'Young E de la couche de support (101) est E $\geq$ 1,9 GPa, de préférence 4 GPa $\leq$ E $\leq$ 20 GPa.

8. Collecteur de courant positif (10) selon la revendication 1 ou 7, dans lequel la couche conductrice à base d'aluminium (102) est une couche de dépôt en phase vapeur ou une couche de dépôt électrolytique.

9. Plaque d'électrode positive, la plaque d'électrode positive comprenant un collecteur de courant positif (10) et une couche de matériau actif d'électrode positive disposée sur le collecteur de courant positif (10), dans laquelle le collecteur de courant positif (10) est le collecteur de courant positif (10) selon l'une quelconque des revendications 1 à 8.

10. Appareil électrochimique (5), l'appareil électrochimique (5) comprenant une plaque d'électrode positive, une plaque d'électrode négative, un séparateur et un electrolyte, dans lequel la plaque d'électrode positive est la plaque d'électrode positive selon la revendication 9.

**11.** Module de batterie (4), comprenant l'appareil électrochimique (5) selon la revendication 10.

**12.** Bloc-batterie (1), comprenant le module de batterie (4) selon la revendication 11.

**13.** Dispositif, comprenant l'appareil électrochimique (5) selon la revendication 10, dans lequel l'appareil électrochimique (5) sert d'alimentation électrique du dispositif ; et
de préférence, le dispositif comprend un dispositif mobile, un véhicule électrique, un train électrique, un satellite, un bateau, et un système de stockage d'énergie.

10

101a

101

D₁

D₂

D₁

102

101b

FIG. 1

10

101a

101

D₁

D₂

102

101b

FIG. 2

10

1011

1012

101

1013

101a

102

101b

FIG. 3

10

101a                                                    103
                                                        102
101

                                                        102
                                                        103

101b

FIG. 4

10

101a                                                    103
                                                        102
101

101b

FIG. 5

10

101a                                                    102
                                                        103
101

                                                        103
                                                        102

101b

FIG. 6

10

101a
101
102
103
D₁
Dₚ
D₂
101b

FIG. 7

10

101a
101
103
102
103
103
102
103
101b

FIG. 8

10

101a
101
103
102
103
101b

FIG. 9

**5**

FIG. 10

**4**     5     5

FIG. 11

**1**

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 34961186 A